# EUROPEAN PATENT APPLICATION

(11) **EP 3 677 778 A1**
(43) Date of publication of application: **08.07.2020**
(21) Application number: 18849856.2
(22) Date of filing: 08.06.2018
(51) Int. Cl.: F04C 2/10, H02K 5/18

(54) **ELECTRIC OIL PUMP**

(30) Priority: 31.08.2017 CN 201710770143
(71) Applicant: Hangzhou Sanhua Research Institute Co., Ltd., Hangzhou, Zhejiang 310018 (CN)
(72) Inventor: LU, Jiangang, Hangzhou, Zhejiang 310018 (CN); WU, Zhiwang, Hangzhou, Zhejiang 310018 (CN); YIN, Bingjiu, Hangzhou, Zhejiang 310018 (CN); ZHANG, Kai, Hangzhou, Zhejiang 310018 (CN); ZHOU, Yubin, Hangzhou, Zhejiang 310018 (CN)
(74) Representative: Epping - Hermann - Fischer
(86) International application number: PCT/CN2018/090337
(87) International publication number: WO 2019/041953

(57) **Abstract**

An electric oil pump (100) comprises a pump housing, a pump rotor assembly (8), a stator assembly (4), a motor rotor assembly (3), and an electric control board (6). The pump housing forms a pump cavity, and the pump cavity comprises a first cavity (80) and a second cavity (90). The pump rotor assembly (8) is provided in the first cavity (80). The stator assembly (4), the motor rotor assembly (3), and the electric control board (6) are provided in the second cavity (90). The pump housing comprises a first housing body (2), and the first housing body (2) comprises a side wall (21). The side wall (21) comprises an inner surface (211) and an outer surface (212). At least part of the inner surface (211) is in contact with at least part of an outer wall of the stator assembly (4). A first heat dissipation portion (26) is provided on the outer surface (212), and at least part of the first heat dissipation portion (26) covers at least part of the periphery of the stator assembly (4). The arrangement facilitates heat dissipation of the stator assembly (4) and extends the service life of the electric oil pump (100).

## Description

The present application claims the priority to Chinese patent application No. 201710770143.4 titled "ELECTRIC OIL PUMP", filed with the China National Intellectual Property Administration on August 31, 2017, which is incorporated herein by reference in its entirety.

### FIELD

The present disclosure relates to the field of vehicles, and in particular to a component of a lubrication system and/or a cooling system of a vehicle.

### BACKGROUND

With the development of vehicle performance towards safer, more reliable, more stable, fully automatic and intelligent, environmentally-friendly and energy saving, electric oil pumps are widely used in lubrication systems and/or cooling systems of vehicles, and can well meet market requirements.

The electric oil pump is mainly configured to provide a power source for the lubrication system and/or the cooling system of the vehicle, and includes a stator assembly. Usually, the stator assembly generates heat during operation. If the heat is accumulated to a certain amount and cannot be dissipated in time, it will affect the performance of the stator assembly, thereby reducing the service life of the electric oil pump.

### SUMMARY

One object of the present disclosure is to provide an electric oil pump, which facilitates heat dissipation of the stator assembly and thereby facilitates improving the service life of the electric oil pump.

In order to achieve the above object, the following technical solutions are provided according to some embodiments of the present disclosure.

An electric oil pump is provided, which includes a pump housing, a pump rotor assembly, a stator assembly, a motor rotor assembly, and an electric control board. The pump housing defines a pump cavity, the pump cavity includes a first cavity and a second cavity, the pump rotor assembly is arranged in the first cavity, and the stator assembly, the motor rotor assembly and the electric control board are arranged in the second cavity, the pump housing includes a first housing, the first housing includes a side wall, the side wall includes an inner surface and an outer surface, at least a part of the inner surface is arranged in contact with at least a part of an outer wall of the stator assembly, the outer surface is provided with or shaped with a first heat dissipating portion, and at least a part of the first heat dissipating portion covers at least a part of an outer circumference of the stator assembly in a circumferential direction of the electric oil pump, which facilitates heat dissipation of the stator assembly and thereby facilitates improving the service life of the electric oil pump.

An electric oil pump is provided, which includes a pump housing, a pump rotor assembly, a stator assembly, a motor rotor assembly, and an electric control board. The pump housing defines a pump cavity, the pump cavity includes a first cavity and a second cavity, the pump rotor assembly is arranged in the first cavity, the stator assembly, the motor rotor assembly and the electric control board are arranged in the second cavity, the pump housing includes a first housing, the first housing includes a side wall, the side wall includes an inner surface and an outer surface, at least a part of the inner surface is arranged in contact with at least a part of an outer wall of the stator assembly, the outer surface is provided with or shaped with a first heat dissipating portion, the first housing includes a hollow portion, a hollow cavity is formed in the hollow portion, the stator assembly and the motor rotor assembly are arranged in the hollow cavity, the stator assembly includes a coil, the coil includes a first top and a first bottom, the first top is closer to the pump rotor assembly than the first bottom, the first heat dissipating portion includes a start portion and an end portion along a central axis direction of the electric oil pump, the start portion is closer to the pump rotor assembly than the end portion, and the first top is closer to the pump rotor assembly than the end portion of the first heat dissipating portion along the central axis direction of the electric oil pump, which facilitates heat dissipation of the stator assembly and thereby facilitates improving the service life of the electric oil pump.

### BRIEF DESCRIPTION OF THE DRAWINGS

Figure 1 is a perspective view showing the structure of an electric oil pump according to an embodiment of the present disclosure;
Figure 2 is a schematic view showing one structure of the electric oil pump in Figure 1 according to an embodiment;
Figure 3 is a schematic view showing another structure of the electric oil pump in Figure 1 according to an embodiment;
Figure 4 is a top view showing the structure of the electric oil pump in Figure 1 according to an embodiment;
Figure 5 is a top view showing the structure of the electric oil pump not assembled with the first housing in Figure 1;
Figure 6 is a perspective view showing the structure of the first housing in Figure 1 according to a first embodiment;
Figure 7 is a schematic view showing the cross-sectional structure of the first housing not provided with the first heat dissipating portion;
Figure 8 is a schematic view showing the cross-sectional structure of the first housing in Figure 6;
Figure 9 is a partially enlarged schematic view showing the structure of a portion A of the first housing in Figure 8;
Figure 10 is a schematic view showing the cross-sectional structure of the first housing in Figure 1 according to a second embodiment;
Figure 11 is a perspective view showing the cross-sectional structure of the first housing in Figure 1 according to a third embodiment;
Figure 12 is a perspective view showing the cross-sectional structure of the first housing in Figure 1 according to a forth embodiment;
Figure 13 is a perspective view showing the structure of the second housing in Figure 1;
Figure 14 is a front view showing the structure of a second housing in Figure 13;
Figure 15 is a schematic view showing the cross-sectional structure of the second housing in Figure 13;
Figure 16 is a perspective view showing the structure of an electric control board in Figure 2;
Figure 17 is a schematic view showing the cross-sectional structure of an electric oil pump according to another embodiment of the present disclosure.

### DEREARED DESCRIPTION

The present disclosure will be further described below in conjunction with the drawings and specific embodiments.

The electric oil pump according to this embodiment is primarily configured to provide flowing power to a working medium of the lubrication system and/or the cooling system of the vehicle, in particular to provide flowing power to the working medium of the lubrication system and/or the cooling system in the vehicle transmission system.

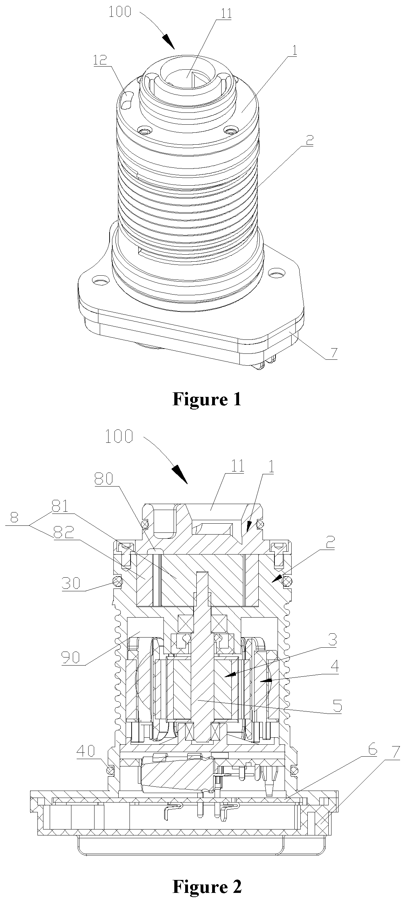

Referring to Figures 1 to 3, the electric oil pump 100 includes a pump housing, a motor rotor assembly 3, a stator assembly 4, a pump shaft 5, a pump rotor assembly 8 and an electric control board 6; the pump housing defines a pump cavity, the motor rotor assembly 3, the stator assembly 4, the pump shaft 5, the pump rotor assembly 8, and the electric control board 6 are accommodated in the pump cavity, and the stator assembly 4 includes a stator core 41 and a coil 42. When the electric oil pump 100 is in operation, the electric control board 6 is configured to control a current passing through the coil 42 of the stator assembly 4 to change according to a certain law, thereby controlling the stator assembly 4 to generate an ever-changing excitation magnetic field, and the motor rotor assembly 3 is rotated under the effect of the excitation magnetic field. The motor rotor assembly 3 drives the pump rotor assembly 8 to rotate. When the pump rotor assembly 8 rotates, the volume of the pump cavity changes, so that the working medium is pushed out to an outlet to generate flowing power.

Referring to Figures 1 to 3, in the embodiment, the pump housing includes a pump cover 1, a first housing 2 and a second housing 7, and the pump cover 11, the first housing 2 and the second housing 7 are relatively fixedly connected; the pump housing defines a pump cavity, the pump cavity includes a first cavity 80 and a second cavity 90, the first cavity 80 has a working medium flowing through, and the pump rotor assembly 8 and the electric control board 6 are arranged in the first cavity 80; the second cavity 90 has no working medium passing through, and the stator assembly 4, the motor rotor assembly 3 and the electric control board 6 are arranged in the second cavity 90; thus, the stator assembly 4 and the electric control board 6 are sufficiently separated from the working medium, thereby ensuring that the performance of the stator assembly and the electric control board is not affected by the working medium.

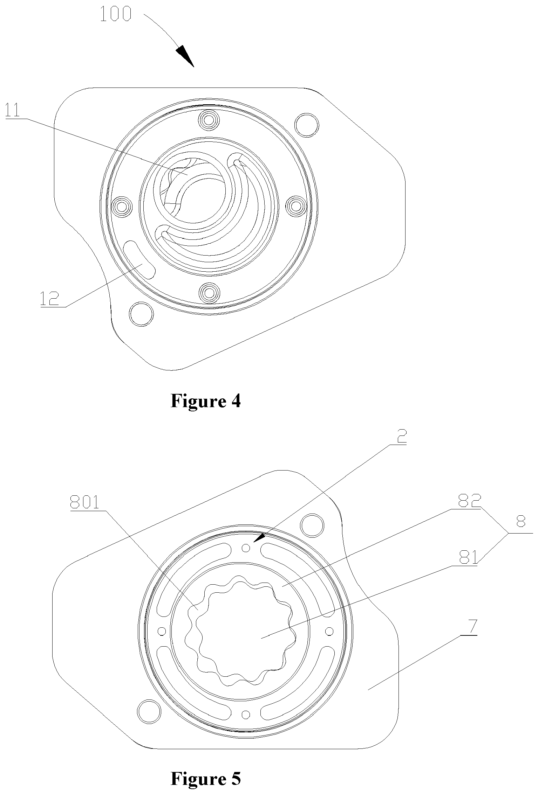

Referring to Figures 2 and 5, in this embodiment, the electric oil pump 100 includes a pump rotor assembly 8, and the pump rotor assembly 8 includes an inner rotor 81 and an outer rotor 82. The inner rotor 81 includes multiple external teeth, the outer rotor 82 includes multiple internal teeth, and a hydraulic cavity 801 is formed between the multiple internal teeth of the outer rotor 82 and the multiple external teeth of the inner rotor 81. In this embodiment, the outer rotor 82 is sleeved on an outer circumference of the inner rotor 81, and a part of the multiple internal teeth of the outer rotor 82 are internally meshed with a part of the multiple external teeth of the inner rotor 81. Referring again to Figures 1 to 5, the electric oil pump includes an inlet 11 and an outlet 12, and the working medium can enter the hydraulic cavity 801 through the inlet 11, and then exit the hydraulic cavity 801 through the outlet 12; and due to the fact that a part of the multiple external teeth of the inner rotor 81 are meshed with a part of the multiple internal teeth of the outer rotor 82, the outer rotor 82 is driven to rotate when the inner rotor 81 rotates. During the process that the pump rotor 8 rotates for one circle, the internal volume of the hydraulic cavity 801 changes as there is a certain eccentric distance between the inner rotor 81 and the outer rotor 82. Specifically, as the pump rotor 8 rotates from a start portion to a certain angle, the internal volume of the hydraulic cavity 801 is gradually increased to form a partial vacuum, and the working medium is drawn into the hydraulic cavity 801 through the inlet 11; and when the pump rotor continues to rotate, the volume of the hydraulic cavity previously filled with the working medium is gradually reduced, and the working medium is squeezed, so that the working medium in the hydraulic cavity 801 is pushed to the outlet 12, thereby generating the flowing power.

Referring to Figures 1 to 3, the pump cover 1 is fixedly connected to the first housing 2, and the first housing 2 is fixedly connected to the second housing 7. In the embodiment, the pump cover 1 and the first housing 2 are connected by screws or bolts, such that the electric oil pump is more convenient to disassemble and assemble, thereby facilitating the maintenance of the pump rotor assembly in the electric oil pump. In practice, the pump cover 1 and the first housing 2 can also be connected by other means, such as plugging-in and snap-fit. The first housing 2 is fixedly connected to the second housing 7, and specifically, the first housing 2 and the second housing 7 are connected by screws or bolts, which, on one hand, renders the electric oil pump more convenient to disassemble and assemble, thereby facilitating the maintenance of the electric control board in the electric oil pump, and on the other hand, renders the connection between the first housing 2 and the second housing 7 more reliable. In practice the first housing 2 and the second housing 7 can also be connected by plugging-in, snap-fit or other connection means.

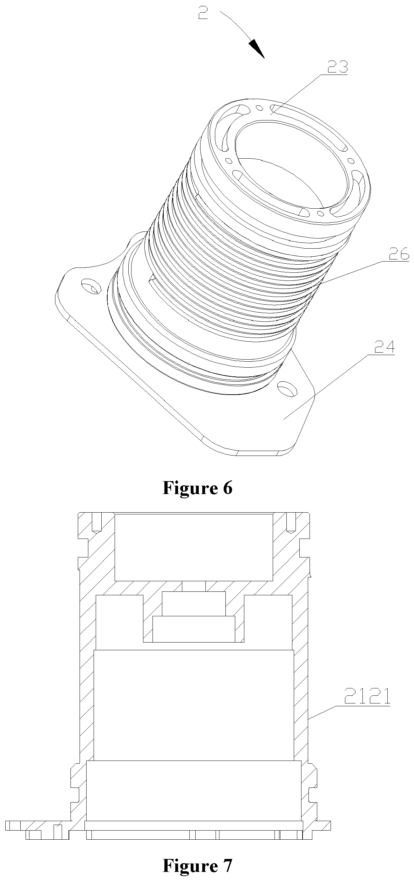

Referring to Figures 6 to 9, Figures 6, 8 and 9 are schematic views showing the structure of the first housing according to a first embodiment, and Figure 7 is a schematic view showing the structure of the first housing not provided with a first heat dissipating portion. The first housing according to the first embodiment will be described hereinafter.

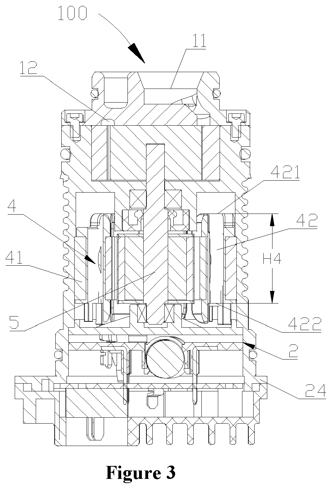

Referring to Figures 6 to 9, the first housing 2 includes a side wall 21 including an inner surface 211 and an outer surface 212. In conjunction with Figure 2, at least a part of the inner surface 211 is arranged in contact with at least a part of an outer wall of the stator assembly 4, the outer surface 212 is provided with a first heat dissipating portion 26, at least a part of the first heat dissipating portion 26 covers at least a part of an outer circumference of the stator assembly 4 in a circumferential direction of the electric oil pump. In this way, at least a part of a longitudinal distribution region of the first heat dissipating portion 26 is arranged corresponding to a hollow cavity 221 in an axial direction of the electric oil pump, which can facilitate heat dissipation of the stator assembly and the electric control board, thereby facilitating improving the service life of the electric oil pump. The first housing 2 includes a hollow portion 22, and the hollow cavity 221 is formed in the hollow portion. The stator assembly and the motor rotor assembly in Figure 2 are arranged in the hollow cavity 221, and at least a part of the longitudinal distribution region of the first heat dissipating portion 26 is located in a portion of the first housing 2 corresponding to the hollow cavity 221, such that at least a part of the longitudinal distribution region of the first heat dissipating portion 26 is arranged corresponding to at least a part of the first housing 2 corresponding to the hollow cavity 221, which facilitates the heat dissipation of the stator assembly and the electric control board. Specifically, the hollow portion 22 includes a first surface 222 and a second surface 223, the first surface 222 is a top surface of the hollow portion 22, and the second surface 223 is a bottom surface of the hollow portion. In conjunction with Figure 2, the first surface 222 is closer to the pump rotor assembly 8 than the second surface 223. A first reference surface is defined to have a central axis coinciding with that of the first surface 222 and coincide with the first surface, and a second reference surface is defined to have a central axis coinciding with that of the second surface 223 and coincide with the second surface 223. In conjunction with Figure 2 or 3, at least a part of the longitudinal distribution region of the first heat dissipating portion 26 is located between the first reference surface and the second reference surface along a central axis direction of the electric oil pump.

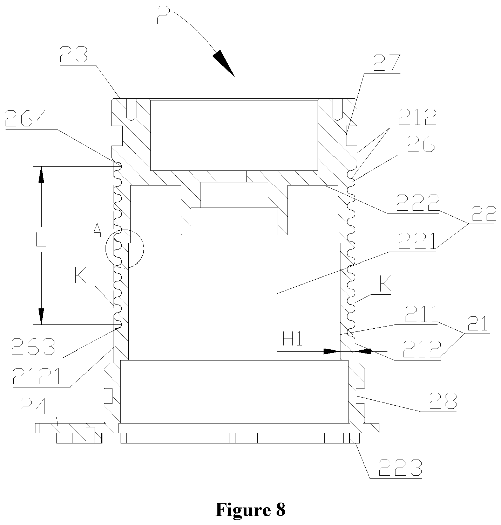

Referring to Figures 3 and 8, the coil 42 includes a first top 421 and a first bottom 422, the first top 421 is closer to the pump rotor assembly 8 than the first bottom 422, the first heat dissipating portion 26 includes a start portion 264 and an end portion 263, along the central axis direction of the electric oil pump 100, the start portion 264 is closer to the pump rotor assembly 8 in Figure 3 than the end portion 263; along the central axis direction of the electric oil pump 100, the first top 421 of the coil 42 in Figure 3 is closer to the pump rotor assembly 8 than the end portion 263 of the first heat dissipating portion 26, that is, the end portion 263 of the first heat dissipating portion 26 is located below the first top 421 of the coil 42 in Figure 3.

Referring to Figure 8, an area of a projection of the first heat dissipating portion 26 onto the outer surface 212 of a corresponding side wall 21 is referred to as a first area, a surface area of the first heat dissipating portion 26 is referred to as a second area, and the second area is larger than or equal to the first area. Referring to Figure 7 again, Figure 7 is a schematic view showing the structure of the first housing not provided with the first heat dissipating portion on the outer surface. Given a defined surface K, the defined surface K is an outer surface not provided with the first heat dissipating portion 26, and the outer surface 212' in Figure 7 may be fitted to Figure 8 to obtain the defined surface K (indicated by the dashed line in Figure 8). The first heat dissipating portion 26 includes multiple convex portions 262 which protrude away from a central axis of the first housing 2. In particular, the convex portions 262 so protrude away from the outer surface 212 as to be tangent to the defined surface K. In this way, a heat dissipation area of the first housing 2 is increased by such means as equivalent to peeling, thereby facilitating heat dissipation of the stator assembly and the electric control board.

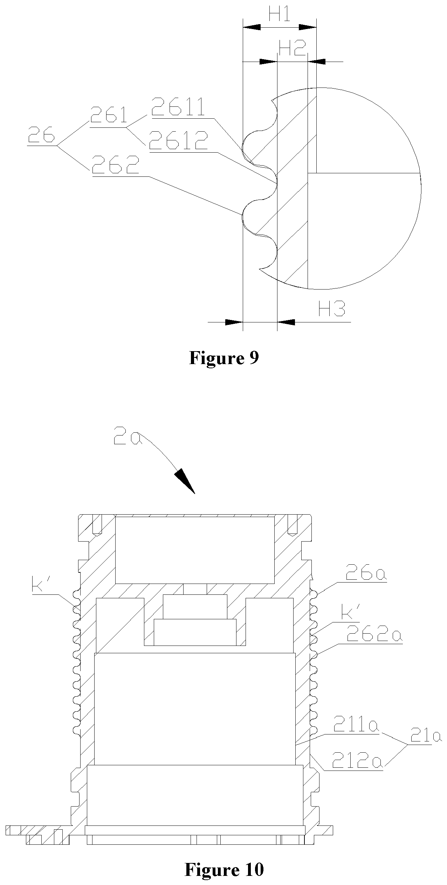

The convex portions 262 are spaced apart or continuously distributed along the central axis direction of the first housing 2. Specifically, referring to Figures 8 and 9, in this embodiment, the first heat dissipating portion 26 further includes multiple concave portions 261, the multiple concave portions 261 are concaved from the outer surface 212 toward the central axis of the first housing 2, and the convex portions 262 and the concave portions 261 are distributed along the axial direction of the electric oil pump. Specifically, the convex portions 262 are spaced apart from each other along the central axis direction of the first housing 2, where the term "spaced apart" means that the concave portions 261 and the convex portions 262 are alternately arranged, that is, a convex portion 262 is provided between each two adjacent concave portions 261, or a concave portion 261 is provided between each two adjacent convex portions 262. In this case, the concave portions 261 are arranged along the axial direction of the electric oil pump, so that the heat dissipation area is maximized, which facilitates the heat dissipation of the stator assembly 4 and the electric control board 6 in Figure 2, thereby facilitating improving the service life of the electric oil pump. In practice, the convex portions 262 can also be continuously distributed along the central axis direction of the first housing 2, where the term "continuously distributed" means that the convex portions 262 are connected end to end.

Referring to Figure 8 and 9, in the embodiment, the multiple convex portions 262 have the same convex height, a wall thickness H1 of the first housing 2 at the convex portion 262 is larger than or equal to 1.5 times the convex height of the convex portion 262, which can ensure the mechanical strength of the side wall 21 of the first housing 2 at the convex portions 262; and a wall thickness H2 of the first housing 2 at the concave portion 261 of the first heat dissipating portion 26 is larger than or equal to 0.5 times a concave depth H3 of the concave portion 261, which can ensure the mechanical strength of the side wall of the first housing 2 at the concave portions 261. Specifically, a vertical distance between the inner surface 211 and the outer surface 212 is defined as a first distance HI, that is, the wall thickness of the first housing 2 at the convex portion 262, the concave portion 261 includes a head portion 2611 and a tail portion 2612, the tail portion 2612 is closer to the central axis of the first housing 2 than the head portion 2611, a vertical distance between the tail portion 2612 and the inner surface 211 is defined as a second distance H2, and a ratio of the second distance H2 to the first distance H1 is larger than or equal to one third, which can ensure the strength of the side wall 21 of the first housing 2 at the first heat dissipating portion 26, causing the side wall of the first housing to be broken due to insufficient mechanical strength.

Referring to Figures 8 and 9, a convex portion 262 or a concave portion 261 located at the start portion 264 of the first heat dissipating portion 26 is in smooth transitional connection with the outer surface 212, and an included angle between a side wall of the convex portion 262 or the concave portion 261 located at the start portion 264 of the first heat dissipating portion 26 and the outer surface 212 is larger than 90°, so that the transition portion has no sharp corners, thereby facilitating reducing the stress concentration at the transition portion. A convex portion 262 or a concave portion 261 located at the end portion263 of the first heat dissipating portion 26 is in smooth transitional connection with the outer surface, and an included angle between a side wall of the convex portion 262 or the concave portion 261 at the end portion 263 of the first heat dissipating portion 26 and the outer surface is larger than 90°, so that the transition portion has no sharp corners, thereby facilitating reducing the stress concentration at the transition portion.

Referring to Figures 2, 3 and 8, the stator assembly 4 includes a stator core 41, a side of the stator core 41 closer to the pump rotor assembly 8 is defined as an upper side, and a side of the stator core 41 closer to the electric control board 6 is defined as a lower side. In an axial direction of the first housing 2, the start portion 264 of the first heat dissipating portion 26 is located above the stator core 41 in Figure 3, and the end portion 263 of the first heat dissipating portion 26 is located below two thirds of the stator core 41, such that the first heat dissipating portion 26 can be provided encompassing as much as possible of the stator core 41, thereby facilitating heat dissipation of the stator assembly 4.

Referring to Figures 6 to 9, the first housing 2 includes a second top 23 and a second bottom 24. In conjunction with Figure 2 or 3, the second top 23 is closer to the pump rotor assembly 8 than the second bottom 24, in the axial direction of the electric oil pump, the stator assembly 4 is at least partially overlapped with the first heat dissipating portion 26, that is, at least a part of the first heat dissipating portion 26 covers at least a part of the outer circumference of the stator assembly 4, and along the central axis direction of the electric oil pump, at least a part of the longitudinal distribution region of the first heat dissipating portion 26 is located between the second top 23 and the second bottom 24, such that the heat generated by the coil 42 during operation of the stator assembly 4 in Figure 2 can be dissipated through the first heat dissipating portion 26 as soon as possible. The concave portion 261 located at the start portion 264 of the first heat dissipating portion 26 is defined as a first concave portion, and the first concave portion is located above the first top 421 of the coil 42, where in practice, it may be a convex portion 262 that is located at the start portion 264; and the concave portion 261 located at the end portion 263 of the first heat dissipating portion 26 is defined as an end concave portion, and the end concave portion is located below the first top 421 of the coil 42, where in practice, it may be a convex portion that is located at the end portion. In this way, it is ensured that at least a part of an axial projection of the longitudinal region between the first concave portion and the end concave portion is overlapped with at least a part of an axial projection of the longitudinal region of the stator assembly along the axial direction of the electric oil pump, thereby facilitating heat dissipation of the stator assembly. Referring to Figure 8, a vertical distance L between a central axis of the end concave portion and a central axis of the first concave portion is larger than or equal to a vertical distance H4 between the first top 421 and the first bottom 422 of the coil 42 in Figure 3, that is, the first heat dissipating portion 26 axially covers the coil 42 and more above, which can ensure that the heat generated by the coil in Figure 3 can be uniformly dissipated through the first heat dissipating portion, thereby improving heat dissipation efficiency.

Referring to Figure 8, the first housing 2 is made of a metal material, and the first housing 2 further includes a first groove 27 and a second groove 28, and the first heat dissipating portion 26 is located between the first groove 27 and the second groove 28. In conjunction with Figure 2, the electric oil pump further includes a first annular seal ring 30 and a second annular seal ring 40. The first annular seal ring 30 is sleeved on the first groove 27, and the second annular seal ring 40 is sleeved on the second groove 28. The first heat dissipating portion 26 is located between the first annular seal ring 30 and the second annular seal ring 40. When the electric oil pump is mounted in an automobile transmission system, the first annular seal ring 30 and the second annular seal ring 40 facilitate preventing a high-pressure oil medium from entering the region where the first heat dissipating portion 26 is located. In this case, an external cold medium can be introduced in contact with the first heat dissipating portion 26, thereby making the heat dissipation of the coil more efficient. Referring to Figures 6 to 10, the concave portions 261 and the convex portions 262 are circumferentially arranged along a circumferential direction of the outer surface 21 of the first housing 2, and the concave portions 261 and the convex portions 262 of the first heat dissipating portion 26 are arranged in an array or evenly distributed along the central axis of the first housing 2, which facilitates increasing an area of the first heat dissipating portion, thereby facilitating the heat dissipation of the coil. In this embodiment, the concave portions 261 and the convex portions 262 of the first heat dissipating portion 26 are both provided occupying an entire circle along the circumferential direction of the outer surface of the first housing 2, while in practice, the concave portions 261 and the convex portions 262 of the first heat dissipating portion 26 may also be provided occupying less than one circle along the circumferential direction of the outer surface 21 of the first housing 2.

Referring to Figure 8, the first housing 2 is longitudinally cut along the axial direction to obtain a longitudinal section. In this embodiment, the first heat dissipating portion 26 has a wave-like shape. In practice, the first heat dissipating portion 26 may also has a wave-like shape composed of other geometries such as rectangles, triangles, or trapezoids.

The structure of the first housing according to the other three embodiments will be described below. For convenience of describing the first housing according to the other three embodiments, the first housing of a second embodiment is labeled as first housing 2a, and the other legends are suffixed by a; the first housing of a third embodiment is labeled as first housing 2b, and the other legends are suffixed by b; and the first housing of a fourth embodiment is labeled as first housing 2c, and the other legends are suffixed by c.

Referring to Figure 10, Figure 10 is a schematic view showing the structure of the first housing according to the second embodiment, and the structure of the first housing according to the second embodiment will be described below.

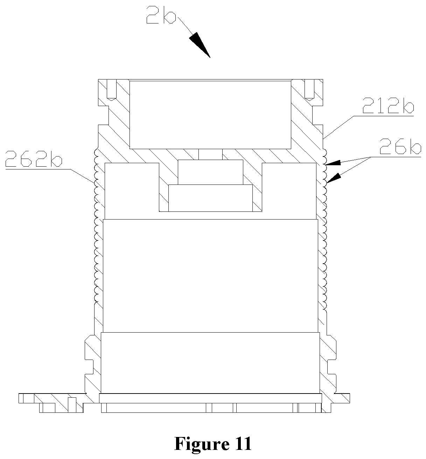

Referring to Figures 7 and 10, the first housing 2a includes a first heat dissipating portion 26a. An area of a projection of the first heat dissipating portion 26a onto an outer surface 212a of a corresponding side wall 21a is referred to as a first area, a surface area of the first heat dissipating portion 26a is referred to as a second area, and the second area is larger than or equal to the first area. Given a defined surface K', the defined surface K' is an outer surface not provided with the first heat dissipating portion 26a, the first area is a surface area of the defined surface K', and the outer surface 212' in Figure 7 is fitted to Figure 10 to obtain the defined surface K' (the dotted line in Figure 11). The first heat dissipating portion 26a includes multiple convex portions 262a, and the multiple convex portions 262a are arranged protruding away from the defined surface K'. Compared with the first embodiment, the first heat dissipating portion 26a is directly provided on the bare outer surface in this embodiment instead of by means of peeling, thereby increasing a heat dissipating area of the first housing 2, which facilitates the heat dissipation of the stator assembly and the electric control board. Reference can be made to the first housing according to the first embodiments for other features in this embodiment, which will not be described herein.

Referring to Figure 11, Figure 11 is a schematic view showing the structure of the first housing according to the third embodiment, and the structure of the first housing according to the third embodiment will be described below.

Referring to Figure 11, the first housing 2b includes a first heat dissipating portion 26b. In this embodiment, the first heat dissipating portion 26b includes multiple convex portions 262b, and the convex portions 262b are arranged protruding away from an outer surface 212b. The multiple convex portions 262b are continuously arranged along an axial direction of the first housing 2b, where the term "continuously arranged" means that each two adjacent convex portions 212b are connected end to end. In this embodiment, the convex portions 262b have the same convex height, and a corresponding wall thickness of the first housing 2 at a corresponding convex portion 262b is larger than or equal to 1.5 times the convex height of the corresponding convex portion 262b. Compared with the first housing according to the other embodiments, the first heat dissipation 26b in this embodiment only includes the convex portions 262b, and does not include any concave portions, which also facilitates relatively increasing an area of the outer surface and thereby the heat dissipation area of the first heat dissipating portion 26b, thereby facilitating the heat dissipation of the stator assembly and the electric control board. Reference can be made to the first housing according to the first embodiment for other features in this embodiment, which will not be described herein.

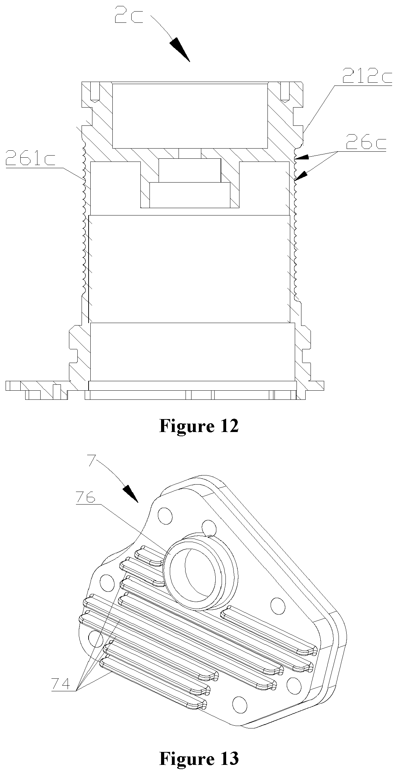

Referring to Figure12, Figure 12 is a schematic view showing the structure of the first housing according to the fourth embodiment, and the structure of the first housing according to the fourth embodiment will be described below.

Referring to Figure 12, the first housing 2c includes a first heat dissipating portion 26c. In this embodiment, the first heat dissipating portion 26c includes multiple concave portions 261c. The concave portions 261c are concaved from an outer surface 212c toward a central axis of the first housing 2c. The concave portions 261c are continuously arranged in an axial direction of the first housing 2c, where the term "continuously arranged" means that the each two adjacent concave portions 261c are connected end to end. A corresponding wall thickness of the first housing 2c at a corresponding concave portion 261c of the first heat dissipating portion 26c is larger than or equal to 0.5 times a concave depth of the corresponding concave portion 261c. Compared with the first housing according to the other embodiments, in this embodiment, the first heat dissipating portion 26c includes only the concave portions 261c, and does not include any convex portions, which also facilitates relatively increasing an area of the outer surface and thereby the heat dissipation area of the first heat dissipating portion, thereby facilitating the heat dissipation of the stator assembly and the electric control board. Reference can be made to the first housing according to the first embodiment for other features in this embodiment, which will not be described herein.

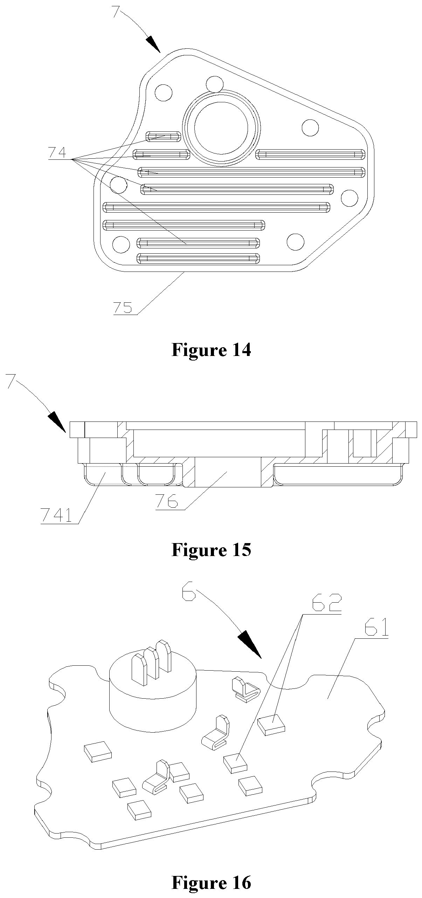

Referring to Figures 1 to 3, the electric oil pump further includes a second housing 7, and the second housing 7 is fixedly connected to the first housing 2. Referring to Figures 13 to 15, Figures 13 to 15 are schematic views showing the structure of the second housing. The second housing includes multiple convex ribs 74, and the convex ribs 74 and the second housing 7 are fixedly connected to each other or formed as one piece. In this embodiment, the convex ribs 74 are integrally formed with the second housing 7 by injection molding. In conjunction with Figure 3, the convex ribs 74 are arranged protruding away from the first housing 2, and the second housing 7 includes a plug 76. In conjunction with Figure 3, the plug 76 is arranged protruding away from the first housing 2. A region of the second housing 7 covered by the convex ribs is referred to as a first region, and an area of the first region is a third area. Referring to Figure 16, the electric control board 6 includes a substrate 61 and a heat-generating electric element 62, and the heat-generating electric element 62 is arranged on the substrate 61. A region of the substrate 61 covered by the heat-generating electric element 62 is referred to as a second region, and an area of the second region is a fourth area. The first region and the second regions are correspondingly arranged. With the first region and the second region vertically projected onto the electric control board 6, at least a part of a vertical projection of the first region is overlapped with at least a part of a vertical projection of the second region and the third area is larger than or equal to the fourth area, by which it is sufficiently ensured that the heat generated by the heat-generating electric element 62 provided on the substrate 61 can be timely dissipated through the convex ribs in a short time, thereby reducing the influence of heat generated by the heat-generating electric element on the performance of the electric control board.

Referring to Figure 14, the second housing 7 further includes a first side wall 75. In this embodiment, the convex ribs 74 are arranged substantially parallel to the first side wall 75, where the term "substantially parallel" means a depth of parallelism of the convex ribs 74 is within 0.5mm with the first side wall 75 serving as a reference surface, such that it can be ensured that as many convex ribs 74 as possible can be provided on the second housing, thereby increasing the heat dissipation area and facilitating the heat dissipation of the circuit board. In practice, the convex ribs 74 can also be arranged at an angle with the first side wall 75. In this embodiment, a shape of a transverse section of the convex rib 74 is a rectangle, while in practice, the transverse section of the convex rib may also have other shapes, such as a trapezoid, a triangle, and an arc.

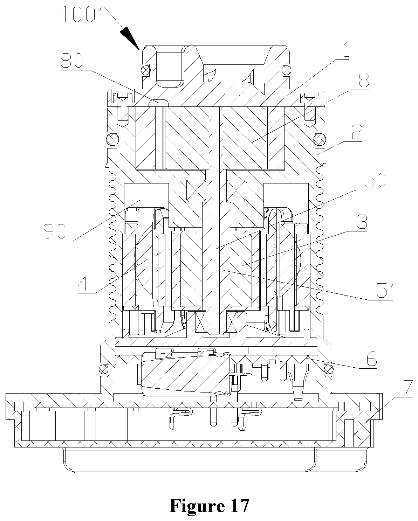

Referring to Figure 17, Figure 17 is a schematic view showing the structure of an electric oil pump according to another embodiment. The electric oil pump 100' includes a pump housing, and the pump housing includes a pump cover 1, a first housing 2 and a second housing 7, where the pump cover 1, the first housing 2 and the second housing 7 are relatively fixedly connected. The pump housing defines a pump cavity, and the pump cavity includes a first cavity 80 and a second cavity 90, the first cavity 80 has a working medium flowing through, and a pump rotor assembly 8 and an electric control board 6 are provided in the first cavity 80; and the second cavity 90 has a working medium passing through, a stator assembly 4, a motor rotor assembly 3 and an electric control board 6 are provided in the second cavity 90. The electric oil pump 100' further includes a pump shaft 5', the pump shaft 5' includes a shaft hole 50 which connects the working media of the first cavity 80 and the second cavity 90 to each other, such that the working medium in the first cavity can flow into the second cavity through the shaft hole 50. Compared with the electric oil pump according to the first embodiment, the second cavity of the electric oil pump according to this embodiment has a working medium passing through, so that the working medium in the second cavity can also take away a part of heat generated by the stator assembly 4 during operation, which better facilitates heat dissipation of the stator assembly. Reference can be made to the electric oil pump according to the first embodiment for other features in this embodiment, which will not be described herein.

It be should be noted that the above embodiments are only used to explain the present disclosure and are not intended to limit the technical solutions described in the present disclosure. Although the present disclosure has been described in detail in conjunction with the above embodiments, those skilled in the art shall appreciate that modifications or equivalent replacements can still be made to the present disclosure by those skilled in the art, and that all the technical solutions and improvements thereof without departing from the spirit and scope of the present disclosure shall fall within the scope defined by the claims of the present disclosure.

## Claims

1. An electric oil pump, comprising a pump housing, a pump rotor assembly, a stator assembly, a motor rotor assembly and an electric control board, the pump housing defining a pump cavity, the pump cavity comprising a first cavity and a second cavity, the pump rotor assembly being arranged in the first cavity, and the stator assembly, the motor rotor assembly and the electric control board being arranged in the second cavity,
wherein the pump housing comprises a first housing, the first housing comprises a side wall, the side wall comprises an inner surface and an outer surface, at least a part of the inner surface is arranged in contact with at least a part of an outer wall of the stator assembly, the outer surface is provided with or shaped with a first heat dissipating portion, at least a part of the first heat dissipating portion covers at least a part of an outer circumference of the stator assembly in a circumferential direction of the electric oil pump.

2. An electric oil pump, comprising a pump housing, a pump rotor assembly, a stator assembly, a motor rotor assembly and an electric control board, the pump housing defining a pump cavity, the pump cavity comprising a first cavity and a second cavity, the pump rotor assembly being arranged in the first cavity, and the stator assembly, the motor rotor assembly and the electric control board being arranged in the second cavity,
wherein the pump housing comprises a first housing, the first housing comprises a side wall, the side wall comprises an inner surface and an outer surface, at least a part of the inner surface is arranged in contact with at least a part of an outer wall of the stator assembly, the outer surface is provided with or shaped with a first heat dissipating portion, the first housing comprises a hollow portion, a hollow cavity is formed in the hollow portion, the stator assembly and the motor rotor assembly are arranged in the hollow cavity, the stator assembly comprises a coil, the coil comprises a first top and a first bottom, the first top is closer to the pump rotor assembly than the first bottom, the first heat dissipating portion comprises a start portion and an end portion along a central axis direction of the electric oil pump, the start portion is closer to the pump rotor assembly than the end portion, and the first top is closer to the pump rotor assembly than the end portion of the first heat dissipating portion along the central axis direction of the electric oil pump.

3. The electric oil pump according to claim 1 or 2, wherein:
the first heat dissipating portion comprises a start portion and an end portion along an axial direction of the first housing, and the start portion is closer to the pump rotor assembly than the end portion; and
the stator assembly comprises a stator core, along the axial direction of the first housing, the start portion of the first heat dissipating portion is located above the stator core and the end portion of the first heat dissipating portion is located below two thirds of the stator core in the context that a side of the stator core closer to the pump rotor assembly is defined as an upper side and a side of the stator core closer to the electric control board is defined as a lower side.

4. The electric oil pump according to any one of claims 1 to 3, wherein: an area of a projection of the first heat dissipating portion onto the outer surface of the side wall is a first area, a surface area of the first heat dissipating portion is a second area, and the second area is larger than or equal to the first area.

5. The electric oil pump according to claim 4, wherein the first heat dissipating portion comprises a plurality of convex portions, the plurality of convex portions are arranged protruding away from the outer surface, and the plurality of convex portions are continuously distributed or spaced apart along an axial direction of the electric oil pump.

6. The electric oil pump according to claim 4, wherein the first heat dissipating portion comprises a plurality of concave portions, the plurality of concave portions are concaved from the outer surface toward a central axis of the first housing, and the plurality of concave portions are continuously distributed or spaced apart along an axial direction of the first housing.

7. The electric oil pump according to claim 4, wherein the first heat dissipating portion comprises a plurality of convex portions, the plurality of convex portions are arranged protruding away from the outer surface, the first heat dissipating portion further comprises a plurality of concave portions, the plurality of concave portions are concaved from the outer surface toward a central axis of the first housing, and the plurality of convex portions and the plurality of concave portions are distributed along an axial direction of the first housing.

8. The electric oil pump according to claim 5 or 7, wherein the plurality of convex portions have a same convex height, and a wall thickness of the first housing at the convex portion is larger than or equal to 1.5 times a convex height of the convex portion.

9. The electric oil pump according to claim 6 or 7, wherein a wall thickness of the first housing at the concave portion of the first heat dissipating portion is larger than or equal to 0.5 times a concave depth of the concave portion, and the plurality of concave portions have a same concave depth.

10. The electric oil pump according to claim 6 or 9, wherein:
a convex portion or a concave portion located at the start portion of the first heat dissipating portion is in smooth transitional connection with the outer surface, and an included angle between a side wall of the convex portion or the concave portion located at the start portion of the first heat dissipating portion and the outer surface is larger than 90°; and
a convex portion or a concave portion located at the end portion of the first heat dissipating portion is in smooth transitional connection with the outer surface, and an included angle between a side wall of the convex portion or the concave portion located at the end portion of the first heat dissipating portion and the outer surface is larger than 90°.

11. The electric oil pump according to any one of claims 1 to 10, wherein:
the first housing is made of a metal material and further comprises a first groove and a second groove, and the first heat dissipating portion is located between the first groove and the second groove; and
the electric oil pump further comprises a first annular seal ring and a second annular seal ring, the first annular seal ring is sleeved on the first groove, the second annular seal ring is sleeved on the second groove, and the first heat dissipating portion is located between the first annular seal ring and the second annular seal ring.

12. The electric oil pump according to any one of claims 1 to 11, further comprising a second housing, wherein the second housing is fixedly connected to the first housing and comprises a plurality of convex ribs, and the plurality of convex ribs are integrally formed with the second housing by injection molding and are arranged protruding away from the first housing.

13. The electric oil pump according to claim 12, wherein:
a region of the second housing provided with the plurality of convex ribs is a first region, and an area of the first region is a third area; and
the electric control board comprises a substrate and a heat-generating electric element, a region of the substrate covered by the heat-generating electric element is a second region, an area of the second region is a fourth area, at least a part of a vertical projection of the first region onto the electric control board is overlapped with at least a part of a vertical projection of the second region onto the electric control board, and the third area is larger than or equal to the fourth area.
